(19) Europäisches Patentamt / European Patent Office / Office européen des brevets

(11) **EP 4 553 541 A2**

(12) **EUROPEAN PATENT APPLICATION**

(43) Date of publication:
**14.05.2025 Bulletin 2025/20**

(21) Application number: 24184251.7

(22) Date of filing: **25.06.2024**

(51) International Patent Classification (IPC):
**G01S 19/04** *(2010.01)*     **G01S 19/07** *(2010.01)*

(52) Cooperative Patent Classification (CPC):
**G01S 19/072; G01S 19/04; G01S 19/073**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.11.2023 US 202318387638**

(71) Applicant: **Veripos Limited
Aberdeen AB21 7DT (GB)**

(72) Inventors:
• **MERVART, Leos
170 00 Praha 7 (CZ)**
• **LUKES, Zdenek
130 00 Praha 3 (CZ)**

(74) Representative: **Kaminski Harmann
Patentanwälte AG
Landstrasse 124
9490 Vaduz (LI)**

(54) **METHOD FOR COMBINING TWO OR MORE SETS OF PRECISE POINT POSITIONING (PPP) CORRECTIONS INCLUDING ALIGNING IONOSPHERIC CORRECTIONS**

(57)     Techniques are provided for transforming navigation corrections into transformed navigation corrections that are compatible with other independently generated navigation corrections. A navigation correction system may generate one or more corrections based on executing a correction algorithm that sets some parameters to arbitrary values. The navigation correction system may receive independently generated reference corrections from a different navigation correction system that executes a correction algorithm that sets some parameters to arbitrary values. The navigation correction system may use the reference corrections and generated corrections with a system of one or more equations to calculate at least one estimated delta value. The correction system may transform a selected generated correction with the estimated delta value to generate a transformed correction that is compatible with the reference corrections. The transformed correction and reference corrections can be used together when implementing a positioning technique (e.g., PPP-AR).

FIG. 1

EP 4 553 541 A2

**Description**

**BACKGROUND**

*Technical Field*

The invention relates generally to navigation corrections, and in particular, to systems, methods, and media for transforming navigation corrections into transformed corrections that are compatible with other independently generated navigation corrections.

*Background Information*

Precise point positioning (PPP) has found increased applications due to its cost-effectiveness, global coverage, and high accuracy. Classic PPP (without ambiguity resolution) may be able to achieve a positional accuracy of 10 cm after a convergence time of several tens of minutes, for example. Techniques enabling PPP with ambiguity resolution (PPP-AR) have been introduced to achieve the same or better position accuracy with considerably reduced convergence time. Traditionally, PPP-AR methods typically use determined correction data in order to resolve carrier phase ambiguities.

For example, a server may process observations from a global network of reference stations to estimate code and phase biases in addition to satellite clock corrections (collectively referred to as global corrections). The corrections determined at the server depend on some parameters that are set to arbitrary values. The global corrections may then be broadcast, and a receiver can use a single set of the global corrections to resolve the carrier phase ambiguities such that high positioning accuracy can be achieved with a convergence time that is considerably reduced when compared to classic PPP.

It should be noted that a global ionospheric correction is not included in the global corrections. This is because the generation of global ionospheric corrections, i.e., a global ionospheric model, is impractical. Specifically, the generation of a global ionospheric model would require a very dense network of reference stations that provide ionospheric data to the server. To accurately model the ionospheric effect, the server would have to simultaneously process the ionospheric data from a plurality of reference stations. This is impractical because it would require vast processing capabilities and a dedicated channel between the server and each of a plurality of different reference stations. Further, and to be a true global ionospheric model, the global ionospheric model would have to cover ocean areas over the entire globe. This is also impractical because ocean areas are not covered by the network of reference stations. Because of these limitations, a highly accurate and global ionospheric model is not possible. Therefore, global ionospheric corrections are not available for traditional PPP-AR methods such that convergence time can be further reduced.

However, regional ionospheric models (RIMs) do exist for some geographical areas. Instead of using global corrections, traditional PPP-AR methods can alternatively use regional corrections to, almost instantaneously, resolve carrier phase ambiguities such that high position accuracy is achieved. Such regional corrections may include estimated code and phase biases, estimated satellite clock corrections, and estimated ionospheric corrections. Similar to global corrections, the local corrections depend on parameters that are set to arbitrary values. These arbitrary values of the parameters may be, and are likely to be, different than the arbitrary values of the parameters used to estimate the global corrections. In fact, the arbitrary values of the parameters may be different even for different sets of corrections for the same (e.g., overlapping) area.

Because the arbitrary values of the parameters are different, the independently generated corrections (e.g., global corrections and regional corrections) are incompatible and cannot be used interchangeably. For example, and due to the incompatibility, the ionospheric corrections that are specific to a geographical area cannot simply be utilized with the global corrections to achieve high position accuracy with reduced convergence time. Stated another way, the estimation of the global corrections is directly dependent on the arbitrary values that are selected/used for the global parameters. Similarly, the estimation of the local corrections is directly dependent on the arbitrary values that are selected/used for the local parameters of the geographical area. Because the values of the global and local parameters are different, the global corrections and local corrections, which are generated independently, are incompatible and cannot be used interchangeably according to traditional approaches.

Therefore, the receiver can implement a traditional PPP-AR method using (1) the global corrections that do not include ionospheric corrections or (2) local corrections for a geographical area when the receiver is located in the geographical area.

If the receiver uses the global corrections, carrier phase ambiguities are resolved without ionospheric corrections. As a result, further reduced convergence time is not achieved. If the receiver uses local corrections for a geographical area, the receiver will have to reset its filter (e.g., position filter) and again resolve the carrier phase ambiguities when the receiver moves out of the geographical area and into a different geographical area. After resetting the filter, the receiver can use the global corrections or the local corrections for the different geographical area to again resolve the carrier phase ambiguities when the receiver is in the different geographical area. Because the filter must be reset and the carrier phase ambiguities resolved each time the receiver switches between corrections, reoccurrence of the convergence period is required. Reoccurrence of the convergence period each time that the receiver switches to a new correction source is undesirable.

## SUMMARY

Techniques are provided for transforming navigation corrections into transformed navigation corrections that are compatible with other independently generated corrections according to the one or more embodiments as described herein. Because the transformed navigation corrections are compatible with the other independently generated corrections, the two sets of corrections can be used together to implement a positioning technique (e.g., PPP-AR).

A navigation correction system may generate one or more navigation corrections. The navigation correction system may execute a correction algorithm that sets one or more parameters to arbitrary values to generate the one or more navigation corrections. Additionally, the navigation correction system may receive other navigation corrections, e.g., reference navigation corrections, which are independently generated by a different navigation correction system. The different navigation correction system may execute a correction algorithm that sets one or more parameters to arbitrary values to generate the reference navigation corrections. The arbitrary values of the parameters may be, and are likely to be, different across different navigation correction systems.

A processor of the navigation correction system may execute a module (e.g., a correction transformation module) that transforms one or more of its generated corrections. Specifically, the module may use the reference corrections with the generated corrections to calculate estimated delta values from a single difference (between satellites) system of one or more equations. In an embodiment, the system of one or more equations may be for code and phase observations, or for any other types of observations. The module may adjust a selected generated correction by a corresponding calculated estimated delta value to generate a transformed navigation correction. In an embodiment, the transformed navigation correction is compatible with the reference corrections. As such, the transformed navigation correction can be used with the reference corrections. Transformed corrections may be transmitted (e.g., broadcast) over one or more networks to a navigation receiver.

The navigation receiver may use the transformed corrections with the reference corrections to implement a positioning technique. For example, the navigation receiver may use the transformed corrections with the reference corrections when implementing PPP-AR.

## BRIEF DESCRIPTION OF THE DRAWINGS

The description below refers to the accompanying drawings, of which:

Fig. 1 is an illustration of an example system environment for transforming navigation corrections into transformed navigation corrections that are compatible with other independently generated navigation corrections according to the one or more embodiments as described herein;

Fig. 2 is an illustration of an example navigation correction system according to the one or more embodiments as described herein;

Fig. 3 is a flow diagram of a sequence of steps for transforming navigation corrections into transformed corrections that are compatible with other independently generated navigation corrections according to the one or more embodiments as described herein; and

Figs. 4A-4C are illustrations of an example body of interest (e.g., vehicle) with a coupled receiver that uses transformed corrections with independently generated other corrections (e.g., reference corrections) as the body of interest moves according to the one or more embodiments as described herein.

## DETAILED DESCRIPTION OF AN ILLUSTRATIVE EMBODIMENT

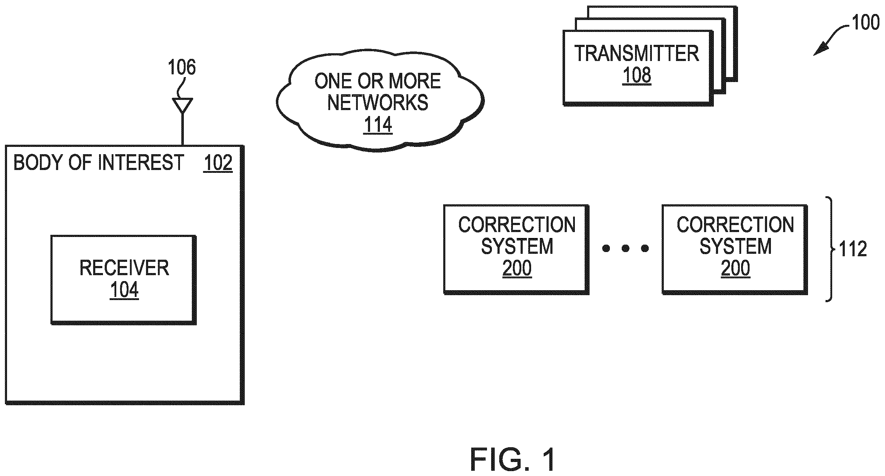

Fig. 1 is an illustration of an example system environment 100 for transforming navigation corrections into transformed navigation corrections that are compatible with other independently generated navigation corrections according to the one or more embodiments as described herein. System environment 100 includes a body of interest 102, e.g., a moving vehicle, a stationary object, etc. Coupled to the body of interest 102 may be a receiver 104 and an antenna 106. The antenna 106, coupled to the body of interest 102 and in communication with receiver 104, may receive one or more signals from one or more transmitters 108.

In an embodiment, the one or more transmitters 108 may be one or more Global Navigation Satellite System (GNSS) satellites that transmit one or more navigation signals, e.g., GNSS satellite signals (not shown). Although reference may be made to transmitters 108 being GNSS satellites transmitting GNSS satellite signals, it is expressly contemplated that the one or more embodiments as described herein may be utilized with any of a variety of different types of transmitters 108. For example, transmitters 108 may be terrestrial transmitters that transmit any of a variety of different navigation signals. As such, the description of transmitters 108 being GNSS satellites that transmit GNSS signals are for illustrative purposes only.

Additionally, system environment 100 includes a plurality of different navigation correction systems 112, where each individual navigation correction system may be referred to as a navigation correction system 200. As described herein, navigation correction system and correction system may be used interchangeably. The ellipsis in Fig. 1 is used to indicate that the plurality of correction systems 112 includes any number, but at least two, different individual navigation correction systems 200. Each correction system 200 may generate navigation correction data. As described herein, navigation corrections and corrections may be used interchangeably. Each correction system 200 may include processors, memory, storage, other hardware, software, and/or firmware (not shown).

According to the one or more embodiments as described herein, each correction system 200 executes a correction algorithm that generates its corresponding corrections by setting some parameters to arbitrary values. The arbitrary values of the parameters may be, and are likely to be, different across different individual correction systems 200.

Each correction system 200 of the plurality of correction systems 112 may provide, over one or more networks 114, corrections to a different correction system 200 and/or receiver 104. The one or more networks 114 may be any wired or wireless network. For example, the one or more networks 114 may include, but are not limited to, an Internet Protocol (IP) based delivery system (wired or wireless), a mobile network such as Long-Term Evolution (LTE), or the 5th generation (5G) mobile network, a satellite-based delivery system such as Inmarsat, etc.

Receiver 104 may, based on the reception of signals at antenna 106, produce raw measurements (e.g., GNSS raw measurements), such as pseudoranges, carrier phases, and Doppler velocities; position (e.g., GNSS position), velocity (e.g., GNSS velocity), attitude, and time (e.g., GNSS time), position covariance, time covariance, and velocity covariance; and, as appropriate, GNSS observables ("GNSS data"). Receiver 104 may include processors, memory, storage, other hardware, software, and/or firmware (not shown).

The receiver 104 may also utilize the GNSS data with the received corrections to mitigate errors (e.g., orbit, clock, antenna, and/or atmospheric induced errors), resulting in the calculation of decimeter-level or better positioning accuracy with reduced convergence time. In an embodiment, receiver 104 may utilize the GNSS data with the received corrections to implement precise point positioning with ambiguity resolution (PPP-AR) to achieve a positional accuracy of 10 cm or better with reduced convergence. In an embodiment, and as will be described in further detail below, receiver 104 may utilize the GNSS data with corrections received from different correction systems (which provide reference corrections and/or transformed corrections) to implement PPP-AR to avoid reoccurring convergence periods.

For example, and as will be described in further detail below, receiver 104 may receive corrections (e.g., reference corrections) from a first correction system 200. Receiver 104 may also receive one or more transformed corrections, which are transformed to be consistent/compatible with the reference corrections, from a second correction system 200. Receiver 104 may implement PPP-AR using the reference corrections, transformed corrections, and GNSS data to calculate decimeter-level or better positioning accuracy with shorter convergence time while also avoiding reoccurring convergence periods. The use of "first" and "second" is not meant to indicate a temporal relationship between two different correction systems 200. Instead, "first" and "second" are illustratively used to differentiate between different individual correction systems 200 that are referenced in the accompanied examples.

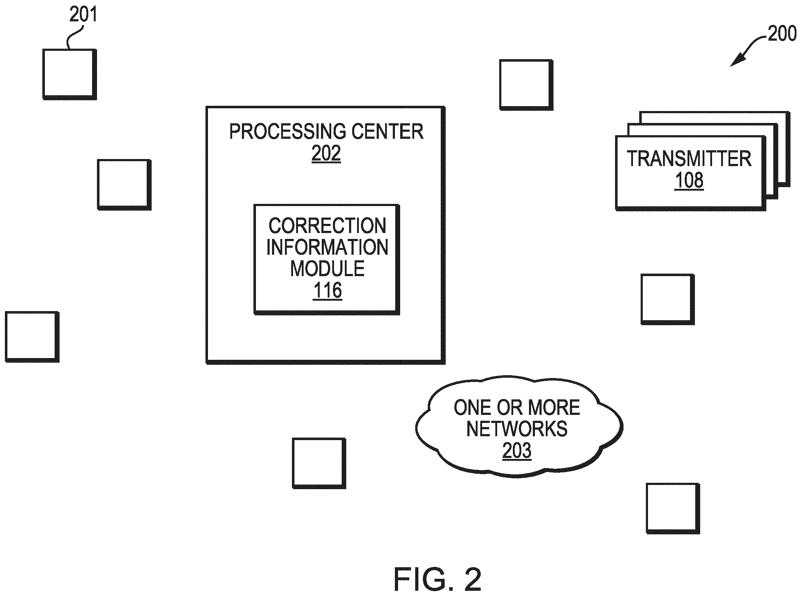

Fig. 2 is an illustration of an example navigation correction system according to the one or more embodiments as described herein. The example navigation correction system 200 may include a plurality of reference stations (e.g., base stations) 201 that define a network. Each of the reference stations 201 may be installed at a precisely known location and receive signals from transmitters 108. The number and locations of the reference stations 201 in Fig. 2 is for illustrative purposes only. For simplicity and ease of understanding, only one reference station 201 in Fig. 2 includes reference number 201, but it is expressly contemplated that each of reference stations in Fig. 2 are associated with reference number 201.

The navigation correction system 200 may also include a processing center 202. The location of the processing center 202 in relation to reference stations 201 is for illustrative purposes only. In an embodiment, the processing center 202 is a computing device (e.g., server) with a processor (not shown) and a memory (not shown). The processing center 202 can generate corrections based on the signals received from the plurality of reference stations 201. The processing center 202 may receive the signals from the plurality of reference stations 201 over one or more networks 203. The one or more networks 203 may be the same as networks 114 of Fig. 1 or different networks. The one or more networks 203 may be any wired or wireless network. For example, the one or more networks 203 may include, but are not limited to, an IP based delivery system (wired or wireless), a mobile network such as LTE, or the 5G mobile network, a satellite-based delivery system such as Inmarsat, etc.

The processing center 202 may execute a correction algorithm that sets some parameters to arbitrary values to generate corresponding corrections from the data of the reference station signals.

As an example, a first correction system 200 may be a global correction system with a plurality of reference stations 201 that are distributed globally to define a global network. In an embodiment, the processing center 202 generates global corrections (e.g., satellite clock, code, and phase corrections) based on the signals received from the globally distributed reference stations 201. Specifically, the processing center 202 corresponding to the global correction system 200 may execute a correction algorithm, which sets some parameters to arbitrary values, to generate the global corrections from the data from the reference station signals. Such global corrections are valid globally and can be used by receiver 104 regardless of the location of receiver 104.

As a different example, a second correction system 200 may be a regional correction system with a plurality of reference stations 201 that are distributed in a region to define a regional network. In an embodiment, the processing center 202 generates regional corrections (e.g., satellite clock, code, phase, and ionospheric corrections) based on the signals received from the regionally distributed reference stations 201. Specifically, the processing center 202 corresponding to the regional correction system 200 may execute a correction algorithm, which sets some parameters to arbitrary values, to generate the regional corrections from the data from the reference station signals.

Because the global corrections and regional corrections are generated independently and using correction algorithms that set parameter values arbitrarily, the global corrections and regional corrections as independently generated cannot simply be used together. Similarly, because sets of different regional corrections are generated independently and using correction algorithms that set parameter values arbitrarily, the sets of different regional corrections as independently generated cannot simply be used together. Further, the same correction algorithm cannot simply be used across different correction systems (e.g., correction networks) because the arbitrary parameters can be, and are likely, different across different correction systems.

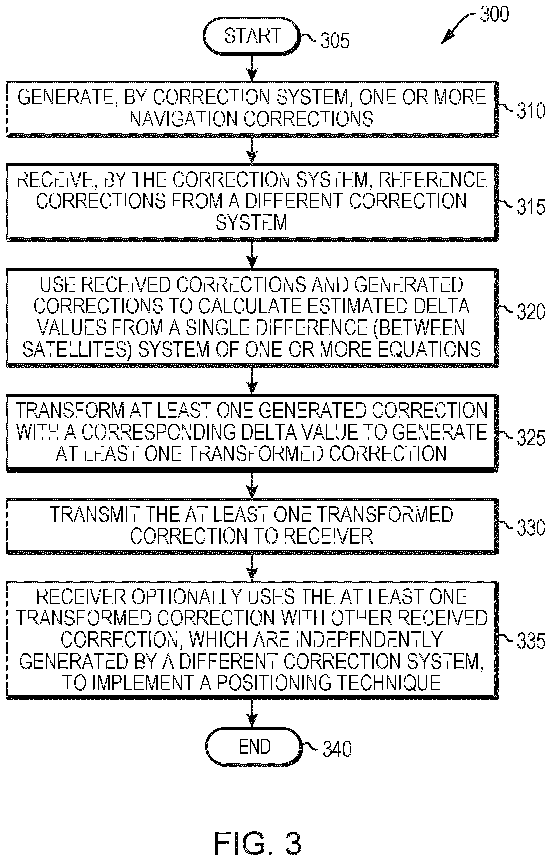

The one or more embodiments as described herein overcome this deficiency. Specifically, and as will be described in further detail below in relation to Fig. 3, each correction system 200 includes a correction transformation module 116 that can transform one or more corrections to generate transformed corrections that can be used with reference corrections that are independently generated by a different correction system 200.

For example, and as will be described in further detail below, the correction transformation module 116 of one or more regional correction systems 200 may transform one or more regional corrections, e.g., ionospheric corrections, to generate transformed regional corrections. As a result, the transformed regional corrections can be used with global reference corrections (e.g., satellite clock, code, and phase corrections) that are independently generated by a global correction system 200.

Therefore, corrections may be independently generated in parallel by a plurality of different correction systems 200, and corrections generated by any number of correction systems 200 can be transformed such that they are compatible with and can be used with a set of other corrections (i.e., reference corrections) that are generated by a different correction system 200.

Although reference may be made to correction systems 200 that are global and regional, it is expressly contemplated that the one or more embodiments as described herein are applicable to any of a variety of different correction systems 200 that independently generate corrections based on an execution of a specific algorithm that sets parameter values arbitrarily. As such, the description of global and regional correction systems 200 is for illustrative purposes only.

As another example, the reference stations 201 of a correction system 200 may be divided into a plurality of sub-networks, and the data from each sub-network of reference stations 201 may be processed independently and in parallel by the processing center 202 to generate sub-network corrections. One of the sub-network corrections may be reference corrections and the other sub-network corrections (e.g., integer ambiguity corrections) may be transformed to generate a single valid set of corrections for the divided correction system 200 according to the one or more embodiments as described herein.

Therefore, corrections may be independently generated in parallel by a plurality of sub-networks of a correction system 200, and corrections generated by all but one of the sub-networks can be transformed such that they are compatible with reference corrections that are generated by the other remaining sub-networks. As a result, a valid set of corrections can be generated across the correction system 200 that is divided into sub-networks.

Fig. 3 is a flow diagram of a sequence of steps for transforming navigation corrections into transformed corrections that are compatible with other independently generated navigation corrections according to the one or more embodiments as described herein. Procedure 300 starts at step 305 and continues to step 310. At step 310, a correction system 200 generates one or more navigation corrections. In an embodiment, processing center 202 of a particular correction system 200 generates corrections based on the signals received from the plurality of reference stations 201. Specifically, the processing center 202 of correction system 200 executes a correction algorithm, which sets some parameters to arbitrary values, to generate corresponding corrections based on the data from the reference stations signals.

As an example, let it be assumed that the correction system 200 in step 310 is a regional correction system. As such, the regional correction system 200 includes a plurality of reference stations 201 that are distributed in a region to define a regional network. The processing center 202 corresponding to the regional correction system 200 may execute a correction algorithm, which sets some parameters to arbitrary values, to generate the regional corrections from the data from the regional reference station signals. For example, such regional corrections may include, but are not limited to, a satellite clock correction ($^g\delta^s$), a code correction ($^g b_F^s$), phase correction ($^g l_F^s$), ionospheric slant delay ($^g I_r^s$), tropospheric slant delay ($^g T_r^s$), and integer ambiguity ($^g n_{Fr}^s$); wherein the index g denotes generated, e.g., corrections generated by a first correction system that in this example is the regional correction system 200.

The procedure 300 continues from step 310 to step 315. At step 315, the correction system 200 (e.g., first correction system 200) receives reference corrections from a different correction system 200. For example, the first correction system 200, which generates the regional corrections in step 310, may receive the reference corrections from a different correction system 200 (e.g., second correction system 200) over network 114.

Continuing with the example as described above, let it be assumed that the second correction system 200 is a global correction system. As such, the global correction system 200 includes a plurality of reference stations 201 that are distributed globally to define a global network. The processing center 202 corresponding to the global correction system 200 may execute a correction algorithm, which sets some parameters to arbitrary values, to generate the global corrections from the data from the global reference station signals. For example, such global corrections may include, but are not limited to, a satellite clock correction ($^R\delta^s$), a code correction ($^R b_F^s$), and a phase correction ($^R l_F^s$); wherein the index R denotes reference, e.g., reference corrections received from a second different correction system that generates the reference corrections and in this example is the global correction system 200.

In an embodiment, the generated corrections (e.g., regional corrections) and the received reference corrections (e.g., global corrections) are generated independently by the first and second correction systems 200, respectively. Because the first and second correction systems 200 set the parameter values arbitrarily when independently generating their respective corrections, the independently generated corrections cannot simply be used with each other. The one or more embodiments as described herein overcome this deficiency as described in further detail below.

Specifically, the procedure 300 continues to step 320 and the correction transformation module 116 of the correction system 200 uses the received reference corrections and the generated corrections to calculate estimated delta values from a single difference (between satellites) system of one or more equations. In an embodiment, the system of one or more equations may be for code and phase observations. Alternatively, the system of one or more equations may be for any of a variety of different types of observations. For the example described in relation to Fig. 2, let it be assumed that the system of one or more equations are for code and phase observations.

Code navigation observations ($P_{Fr}^s$) and phase navigation observations ($L_{Fr}^s$) can be expressed as:

$$ P_{Fr}^s = \varrho_r^s + \delta_r - \delta^s + T_r^s + \frac{f_1^2}{f_F^2} I_r^s + b_{Fr} - b_F^s \qquad (1a) $$

where

$$ L_{Fr}^s = \varrho_r^s + \delta_r - \delta^s + T_r^s - \frac{f_1^2}{f_F^2} I_r^s + l_{Fr} - l_F^s + n_{Fr}^s \lambda_F \quad (1b) $$

- Index F denotes the carrier;
- Index S denotes transmitter 108 (e.g., satellite);
- Index r denotes the receiver 104;
- 

$$ \varrho_r^s $$

is a distance traveled by a signal between the transmitter 108 (e.g., satellite) and receiver 104;
- $\delta_r$ is the receiver 104 clock error (e.g., in meters);
- $\delta^s$ is the transmitter 108 (e.g., satellite) clock error (e.g., in meters);
- $I_r^s$ is the ionospheric slant delay;
- $f_1$ is the frequency of a first carrier;
- $f_F$ is the frequency of a second carrier;

- $b_{Fr}$ is the receiver code bias;
- $b_F^s$ is the satellite code bias;
- $l_{Fr}$ is the receiver phase bias;
- $l_F^s$ is the satellite phase bias;
- $n_{Fr}^s$ is the integer ambiguity; and
- $\lambda_F$ is the wavelength.

Equations (1a) and (1b) can be expressed for both the generated corrections and reference corrections as follows:

$$^R\delta_r - {}^R\delta^s + {}^RT_r^s + \frac{f_1^2}{f_F^2}\ {}^RI_r^s + {}^Rb_{Fr} - {}^Rb_F^s =$$

$$^g\delta_r - {}^g\delta^s + {}^gT_r^s + \frac{f_1^2}{f_F^2}\ {}^gI_r^s + {}^gb_{Fr} - {}^gb_F^s \qquad (2a)$$

$$^R\delta_r - {}^R\delta^s + {}^RT_r^s - \frac{f_1^2}{f_F^2}\ {}^RI_r^s + {}^Rl_{Fr} - {}^Rl_F^s + {}^Rn_{Fr}^s\lambda_F =$$

$$^g\delta_r - {}^g\delta^s + {}^gT_r^s - \frac{f_1^2}{f_F^2}\ {}^gI_r^s + {}^gl_{Fr} - {}^gl_F^s + {}^gn_{Fr}^s\lambda_F \qquad (2b)$$

The following notations may be used for particular variables in equations (2a) and (2b):

$$^g\Delta T_r^s = {}^gT_r^s - {}^RT_r^s, \quad {}^g\Delta I_r^s = {}^gI_r^s - {}^RI_r^s, \quad {}^g\Delta n_{Fr}^s = {}^gn_{Fr}^s - {}^Rn_{Fr}^s$$

$$^g\Delta\delta_r = {}^g\delta_r - {}^R\delta_r, \quad {}^g\Delta b_{Fr} = {}^gb_{Fr} - {}^Rb_{Fr}, \quad {}^g\Delta l_{Fr} = {}^gl_{Fr} - {}^Rl_{Fr}$$

Using the above notations, equations (2a) and (2b) can be rewritten as:

$$-{}^R\delta^s + {}^g\delta^s - {}^Rb_F^s + {}^gb_F^s =$$

$$^g\Delta\delta_r + {}^g\Delta b_{Fr} + {}^g\Delta T_r^s + \frac{f_1^2}{f_F^2}\ {}^g\Delta I_r^s \qquad (3a)$$

$$-{}^R\delta^s + {}^g\delta^s - {}^Rl_F^s + {}^gl_F^s =$$

$$^g\Delta\delta_r + {}^g\Delta l_{Fr} + {}^g\Delta T_r^s - \frac{f_1^2}{f_F^2}\ {}^g\Delta I_r^s + {}^g\Delta n_{Fr}^s\lambda_F \qquad (3b)$$

The left side of equations (3a) and (3b) do not depend on the receiver, e.g., none of the variables on the left side of equations (3a) and (3b) have a subscript of r. Further, the right side of equations (3a) and (3b) only included estimated delta ("$\Delta$") values and constants such as frequency and wavelength, which are independent of the receiver. Therefore, the receiver index *of r* can be omitted from equations (3a) and (3b).

By omitting receiver index r (i.e., subscript r) and rearranging equations (3a) and (3b), equations (3a) and (3b) can be rewritten as

$$^g\delta^s + {}^gb_F^s = {}^R\delta^s + {}^Rb_F^s + {}^g\Delta\delta + {}^g\Delta T^s + \frac{f_1}{f_F^2}\ {}^g\Delta I^s + {}^g\Delta b_F \qquad (4a)$$

$$^{g}\delta^{s} + \ ^{g}l_{F}^{s} = \ ^{R}\delta^{s} + \ ^{R}l_{F}^{s} + \ ^{g}\Delta\delta + \ ^{g}\Delta T^{s} - \frac{f_{1}^{2}}{f_{F}^{2}} \ ^{g}\Delta I^{s} + \ ^{g}\Delta l_{F} +$$

$$^{g}\Delta n_{F}^{s}\lambda_{F} \hspace{6cm} (4b)$$

where

$$^{g}\Delta T^{s} = \ ^{g}T_{r}^{s} - \ ^{R}T_{r}^{s}, \ \ ^{g}\Delta I^{s} = \ ^{g}I_{r}^{s} - \ ^{R}I_{r}^{s}, \ \ ^{g}\Delta n_{F}^{s} = \ ^{g}n_{Fr}^{s} - \ ^{R}n_{Fr}^{s} \hspace{1cm} (5a)$$

$$^{g}\Delta\delta = \ ^{g}\delta_{r} - \ ^{R}\delta_{r}, \ \ ^{g}\Delta b_{F} = \ ^{g}b_{Fr} - \ ^{R}b_{Fr}, \ \ ^{g}\Delta l_{F} = \ ^{g}l_{Fr} - \ ^{R}l_{Fr} \hspace{1cm} (5b)$$

Thus, only two equations (equations (4a) and (4b)) have to be solved for each satellite. In an embodiment, equations (4a) and (4b) together form the system of one or more equations for code and phase observations that are solved to calculate estimated delta values of: $^{g}\Delta T^{s}$, $^{g}\Delta I^{s}$, $^{g}\Delta n_{F}^{s}$, $^{g}\Delta\delta$, $^{g}\Delta b_{F}$, $^{g}\Delta l_{F}$.

Referring back to Fig. 3, the procedure continues from step 320 to step 325. At step 325, the correction transformation module 116 transforms at least one generated correction with a corresponding estimated delta value to generate at least one transformed correction.

Continuing with the example above, the regional correction system 200 generates $^{g}I_{r}^{s}$ at step 310. Additionally, at step 320, the transformation module 116 of the regional correction system 200 may calculate $^{g}\Delta I^{s}$ by solving equations (4a) and (4b), which are the system of one or more equations, using the reference corrections with the generated corrections. Therefore, the correction transformation module 116 may calculate a transformed ionosphere slant delay, which is $^{R}I_{r}^{s}$ in the equations of (5a), by subtracting $^{g}\Delta I^{s}$ from $^{g}I_{r}^{s}$ (e.g., $^{g}\Delta I^{s} = \ ^{g}I_{r}^{s} - \ ^{R}I_{r}^{s}$). The correction transformation module 116 may similarly calculate a transformed integer ambiguity correction, which is $^{R}n_{Fr}^{s}$ in the equations of (5a), by subtracting $^{g}\Delta n_{F}^{s}$ from $^{g}n_{Fr}^{s}$ (e.g., $^{g}\Delta n_{F}^{s} = \ ^{g}n_{Fr}^{s} - \ ^{R}n_{Fr}^{s}$). The correction transformation module 116 may calculate other transformed corrections in a similar manner and using the other estimated delta values (e.g., $^{g}\Delta T^{s}$ $^{g}\Delta\delta$, $^{g}\Delta b_{F}$, $^{g}\Delta l_{F}$).

Advantageously, the transformed correction is compatible with the received reference corrections. Specifically, and in this example, the transformed ionospheric correction ($^{R}I_{r}^{s}$) that is generated in step 325 is compatible with the received global reference corrections. In an embodiment, compatible means that a transformed correction can be used with different corrections that are independently generated by a different correction system that sets parameters to arbitrary values when generating the different corrections.

By generating transformed corrections that are compatible with other reference corrections, the one or more embodiments as described herein provide an improvement in the existing technological field of navigation systems. Stated another way, because the one or more embodiments as described herein generate transformed corrections that are compatible with reference corrections, a network of different yet compatible corrections can be broadcast to receivers that can use the different but compatible corrections. As such, the generation of the transformed corrections amounts to a significantly more robust network of correction systems that are compatible with each other.

The procedure 300 continues to step 330. At step 330, the correction system 200 transmits the at least one transformed correction to receiver 104. The correction system 200 may transmit (i.e., broadcast) the at least one transformed corrections over network 114 to receiver 104. Continuing with the above example, the regional correction system 200 may transmit the transformed ionosphere slant delay to receiver 104. By transmitting transformed corrections over a network to receiver 104, the one or more embodiments as described herein provide an improvement in the technological field of navigation systems. That is, the one or more embodiments as described herein allow a network of a plurality of different correction systems 200, that each generate corrections independently and based on arbitrarily set parameter values, to transmit compatible corrections to navigation receivers. By transmitting compatible corrections to navigation receivers, the one or more embodiments as described herein provide an improvement in the existing technological field of navigation systems.

The procedure 300 optionally continues from step 330 to 335. At step 335, receiver 104 uses the at least one transformed correction with other received corrections (e.g., reference corrections), which are independently generated by a different correction system, to implement a positioning technique. In an embodiment, the positioning technique is PPP-AR that allows receiver 104 to achieve a positional accuracy of 10 cm or better with reduced convergence time when, for example, compared to classic PPP. In an embodiment, the receiver 104 may resolve carrier phase ambiguities at each epoch using GNSS data, the reference corrections, and the transformed corrections. The procedure 300 ends at step 340.

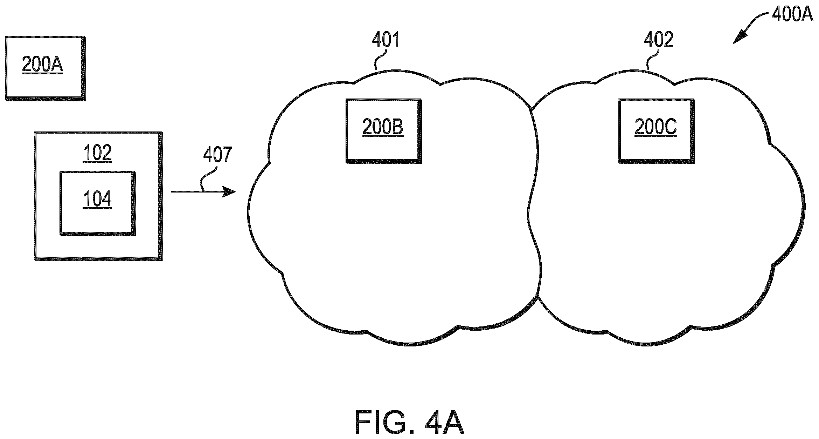

Figs. 4A-4C are illustrations of an example body of interest 102 (e.g., vehicle) with a coupled receiver 104 that uses transformed corrections with independently generated other corrections (e.g., reference corrections) as the body of interest 102 moves according to the one or more embodiments as described herein.

For the example as depicted in Figs. 4A-4C, let it be assumed that correction system 200A is a global correction system, while correction systems 200B and 200C are two different regional correction systems. Regional correction systems 200B and 200C may correspond to the regions that are defined by perimeters 401 and 402, respectively. As depicted in Figs. 4A-4C, the regions defined by perimeters 401 and 402 may share a boundary. However, it is expressly contemplated that regions that are covered by corrections systems do not need to share a boundary and in fact may be completely distinct, overlap, share one or more boundaries, etc. according to the one or more embodiments as described herein.

For simplicity, the base stations 201, processing centers 202, and transformation modules 116 for the global correction system 200A and the regional corrections systems 200B and 200C have been excluded from Figs. 4A-4C. However, it is expressly contemplated that each of the correction systems 200A-200C do in fact include base stations 201, a processing center 202, and a correction transformation module 116 that operate as described above in relation to Figs. 2 and 3.

Each of correction systems 200A-200C independently generate their respective corrections by setting some parameters to arbitrary values. As such, the corrections that are independently generated cannot simply be mixed or used with corrections that are independently generated by a different correction system. For example, the global corrections that are generated by global correction system 200A cannot simply be used with the regional corrections that are respectively generated by regional correction systems 200B and 200C. Therefore, and as described above in relation to the flow diagram of Fig. 3, the correction transformation module 116 of a correction system (e.g., 200A-200C) may transform one or more generated corrections to generate one or more transformed corrections that can be used with other independently generated corrections.

For example, and as will be described in further detail below in relation to Figs. 4A-4C, each of regional correction systems 200B and 200C may transform their respectively generated regional correction such that the transformed corrections can be used with the global corrections that are independently generated by global correction system 200A.

As depicted in Fig. 4A, environment 400A includes body of interest 102 with receiver 104 that is not located in a geographical location that is covered by a regional correction system. Specifically, the location of the body of interest 102 with receiver 104 is not within the geographical areas that are defined by perimeters 401 and 402 that correspond to regional correction systems 200B and 200C, respectively. Because the receiver 104 is not located in the geographical areas that are defined by perimeters 401 and 402 as depicted in Fig. 4A, receiver 104 cannot use the regional corrections that are independently generated by corrections systems 200B and 200C.

Therefore, receiver 104 may receive global corrections from global correction system 200A over network 114. The receiver 104 may utilize the global corrections with GNSS data to implement a positioning technique. For example, the positioning technique may be PPP-AR. Because the global corrections do not include an ionospheric correction (e.g., slant delay value), the ionospheric correction is an unknown parameter that is estimated during PPP-AR. The receiver 104 may resolve carrier phase ambiguities at each epoch using the GNSS data with the global corrections when, for example, the body of interest 102 is not within the geographical areas corresponding to the correction systems 200B and 200C. Therefore, convergence time is not reduced or optimal when compared to, for example, implementing PPP-AR where the slant delay is a known value (e.g., the slant delay is not an unknown parameter). As depicted in Fig. 4A, arrow 407 indicates that the body of interest 102 is moving toward the geographical area that is defined by perimeter 401 and that corresponds to correction system 200B.

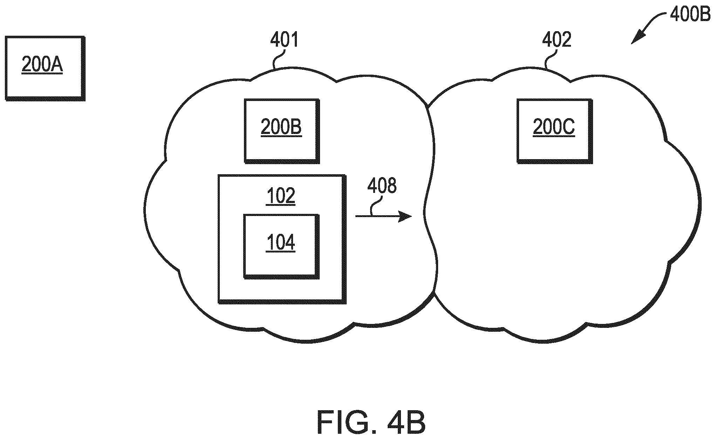

Fig. 4B is environment 400B and represents a point in time when body of interest 102 is within the geographical area that is defined by perimeter 401 and that corresponds to correction system 200B. With conventional systems and techniques, receiver 104 could either (1) continue to use the global corrections to implement PPP-AR or (2) switch over and use the regional corrections that are generated by correction system 200B. As mentioned above, continuing to use the global corrections is not desirable because reduced and optimal convergence time is not achieved since some parameters (e.g., ionospheric correction) are unknown parameters and have to be estimated. Therefore, with conventional systems and techniques, receiver 104 could switch over and use the regional corrections that are generated by correction system 200B. To switch over and use the regional corrections, receiver 104 would have to reset its filter (e.g., position filter) which causes reoccurrence of the convergence period, which is undesirable. Conventional systems and techniques cannot, for example, use a regional correction, e.g., the ionospheric correction, with the independently generated global corrections because the regional and global corrections are generated independently based on some parameters being set to arbitrary values.

The one or more embodiments as described herein overcome such deficiencies. Specifically, the regional corrections, e.g., ionospheric correction, can be transformed to be compatible with the global corrections as described above with relation to the flow diagram of Fig. 3. For example, the regional correction system 200B may receive the independently generated global corrections from global correction system 200A over network 114. As described above in relation to the flow diagram of Fig. 3, the regional correction system 200B may use the independently generated global corrections with its generated regional corrections to transform the regional corrections, e.g., ionospheric correction, into a transformed correction that is compatible with the global corrections.

Therefore, and when the body of interest 102 enters the geographical area defined by perimeter 401, the receiver 104 can use the transformed corrections, e.g., transformed ionospheric correction, generated by correction system 200B. As a result, the receiver 104 can, without resetting the filter, use the GNSS data with the transformed regional correction and the received global corrections to implement PPP-AR while in the geographical area defined by perimeter 401. Because the filter does not have to be reset, the reoccurrence of the convergence period is avoided according to the one or more embodiments as described herein.

While receiver 104 is in the geographical area defined by perimeter 401, receiver 104 can, without resetting the filter, continue to use the GNSS data with global corrections received from correction system 200A and the transformed corrections received from correction system 200B. Therefore, reoccurrence of the convergence period is avoided when implementing PPP-AR using the transformed corrections with the independently generated global corrections according to the one or more embodiments as described herein. As depicted in Fig. 4B, arrow 408 indicates that the body of interest 102 is moving towards the geographical area that is defined by perimeter 402 and that corresponds to correction system 200C.

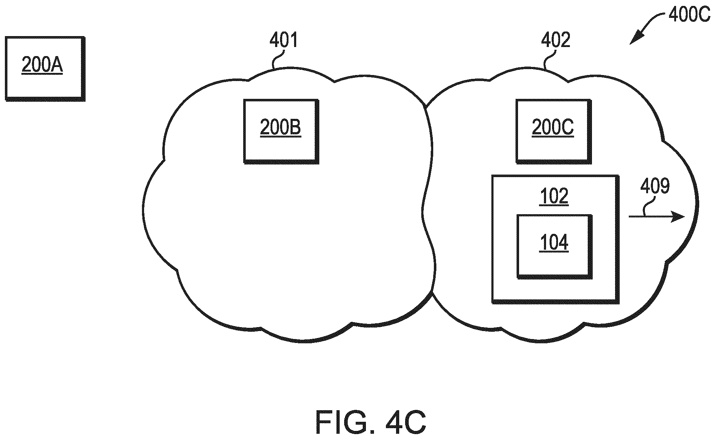

Fig. 4C is environment 400C and represents a point in time when body of interest 102 is within the geographical area that is defined by perimeter 402 and that corresponds to correction system 200C. Because receiver 104 is no longer in the geographical area defined by perimeter 401 that corresponds to correction system 200B, receiver 104 can no longer use the transformed corrections generated by correction system 200B. However, and as will be described in further detail below, receiver 104 can use the transformed corrections generated by correction system 200C to implement PPP-AR.

When receiver 104 is in the geographical area that is defined by perimeter 402, conventional systems and techniques would require that receiver 104 (1) switch over and use the global corrections or (2) switch over and use the regional corrections that are generated by correction system 200C. As explained above, this is due to the incompatibility between corrections that are independently generated based on some parameters being set to arbitrary values. In both instances, and according to conventional systems and techniques, the receiver 104 would have to reset its filter to implement PPP-AR with the global corrections or the regional corrections from correction system 200C. As a result, reoccurrence of the convergence period is required.

The one or more embodiments as described herein overcome such deficiencies. Specifically, the regional corrections, e.g., ionospheric correction, generated at correction system 200C can be transformed to be compatible with the global corrections as described above with relation to the flow diagram of Fig. 3. For example, the regional correction system 200C may receive the independently generated global corrections from global correction system 200A over network 114. As described above in relation to the flow diagram of Fig. 3, the regional correction system 200C may use the independently generated global corrections with its generated regional corrections to transform the regional corrections, e.g., ionospheric correction, into a transformed correction that is compatible with the global corrections.

Therefore, and when the body of interest 102 enters the geographical area defined by perimeter 402, the receiver 104 can use the transformed corrections, e.g., transformed ionospheric correction, generated by correction system 200C. As a result, the receiver 104 can, without resetting the filter, use the GNSS data with the transformed regional corrections and the global corrections to implement PPP-AR while in the geographical area defined by perimeter 402. Because the filter does not have to be reset, the reoccurrence of the convergence period is avoided according to the one or more embodiments as described herein.

While receiver 104 is in the geographical area defined by perimeter 402, receiver 104 can, without resetting the filter and thus avoiding reoccurrence of the convergence period, continue to use the GNSS data with global corrections received from correction system 200A and the transformed corrections received from correction system 200C.

Therefore, the one or more embodiments as described herein allow the receiver 104 to implement PPP-AR by seamlessly mixing reference corrections (e.g., global corrections) with transformed corrections that correspond to the geographical area in which the receiver 104 is located without requiring receiver 104 to reset its filter.

For example, let it be assumed that there are 10 regional correction systems and a single global correction system. In this further example, let it be assumed that the global corrections are the reference corrections. As such, each of the 10 regional correction systems may receive the global corrections over network 114. Each of the 10 regional correction systems may transform their respective regional corrections to be compatible with the global corrections in the manner described above in relation to Fig. 3.

Therefore, receiver 104 may use the global corrections to implement PPP-AR when the receiver 104 is not located in the 10 geographical areas corresponding to the 10 regional correction systems. When the receiver enters each of the 10 geographical areas, the receiver 104 can use the transformed corrections with the global corrections to implement PPP-AR.

As a result, the receiver 104 does not have to reset its filter and can instead seamlessly mix the global corrections with the transformed corrections to implement PPP-AR as the receiver moves in and out of the 10 different geographical areas. This is in contrast to conventional systems and techniques that, for example, require the receiver 104 to reset its filter every time the receiver has to switch over and use different corrections as the receiver 104 moves into and out of the different geographical areas. As such, and when compared to conventional systems and techniques, the one or more embodiments as described herein avoid reoccurrence of the convergence period.

Although some examples as described herein use global corrections as the reference corrections, it is expressly contemplated that any set of corrections that are generated by a correction system 200 may be the reference corrections. For example, the regional corrections generated by a particular regional correction system can be the reference corrections and other corrections that are independently generated by other correction systems (e.g., global correction system, other regional correction systems) can be transformed to be compatible with the reference regional corrections.

The examples as described herein relate to correction systems that generate corrections based on the propagation of GNSS signals that may, for example, be impacted by a variety of different factors (e.g., ionosphere, clock error, etc.). However, it is expressly contemplated that the one or more embodiments as described herein are applicable to correction systems that generate navigation corrections based on the propagation of any types of signals that may be impacted by any factors. For example, a correction system may generate corrections based on the propagation of terrestrial signals that may be impacted by variations in the propagation medium, such as salinity, composition, pressure, water content, infrastructure, etc. The one or more embodiments as described herein are applicable to these types of corrections systems and any of a variety of other types of correction systems that generate corrections from signals that are impacted by varying factors. As such, the description of corrections that are generated based on the propagation of GNSS signals is for illustrative purposes only.

As an even further example, a correction system for a large geographical area may be divided into a plurality of sub-networks. For example, let it be assumed that a regional correction system 200 is divided into 6 different sub-networks including different base stations 201. The processing center 202 of the regional correction system 200 may generate, in parallel, corrections for the 6 different sub-networks. The generated corrections for a single particular sub-network, e.g., first sub-network, may be the reference corrections and the corrections for the 5 other sub-networks may be transformed to be compatible with the sub-network reference corrections in the manner described above in relation to Fig. 3.

As such, a single valid set of compatible corrections exist for the correction system 200 that is divided into 6 sub-networks according to the one or more embodiments as described herein. By dividing the correction system 200 into compatible sub-networks, the one or more embodiments as described herein conserve processing resources when compared to conventional systems that have to generate a single set of corrections based on all the base stations 201 for the large geographical area. Therefore, it should be expressly understood that the examples as described herein are for illustrative purposes only and any correction system or sub-network of a correction system may generate corrections that can be the reference corrections according to the one or more embodiments as described herein.

It should be understood that a wide variety of adaptations and modifications may be made to the techniques. For example, the steps of the flow diagrams as described herein may be performed sequentially, in parallel, or in one or more varied orders. In general, functionality may be implemented in software, hardware or various combinations thereof. Software implementations may include electronic device-executable instructions (e.g., computer-executable instructions) stored in a non-transitory electronic device-readable medium (e.g., a non-transitory computer-readable medium), such as a volatile memory, a persistent storage device, or other tangible medium. Hardware implementations may include logic circuits, application specific integrated circuits, and/or other types of hardware components. Further, combined software/hardware implementations may include both electronic device-executable instructions stored in a non-transitory electronic device-readable medium, as well as one or more hardware components. Above all, it should be understood that the above description is meant to be taken only by way of example.

**Claims**

1. A navigation correction system, comprising:
   a processor executing a correction transformation module, the correction transformation module configured to:

   generate navigation corrections by executing a first correction algorithm that sets one or more first parameters to arbitrary values;
   receive, from a different navigation correction system, independently generated reference corrections that are generated by the different navigation correction system that executes a second correction algorithm that sets one or more second parameters to arbitrary values, wherein the navigation corrections are incompatible with the independently generated reference corrections;

solve, using the generated navigation corrections with the independently generated reference corrections, a system of one or more equations for observations, wherein the solving calculates one or more estimated delta values; and

transform a selected generated navigation correction by adjusting the selected generated navigation correction by a corresponding selected estimated delta value, wherein the transforming generates a transformed navigation correction, and

wherein the transformed navigation correction is compatible with the independently generated reference corrections.

2. The navigation correction system of claim 1, wherein the correction transformation module is further configured to: broadcast, over one or more communication networks, the transformed navigation correction to one or more navigation receivers.

3. The navigation correction system of claim 1 or 2, wherein the transformed correction is used with the independently generated reference corrections when implementing a precise point positioning with ambiguity resolution algorithm.

4. The navigation correction system of one of claims 1 to 3, wherein the transformed correction is a transformed ionospheric correction,
in particular wherein the corresponding selected estimated delta value is an estimated delta ionospheric value, and the correction transformation module is further configured to subtract the estimated delta ionospheric value from a generated ionospheric correction to generate a transformed ionospheric correction that is the transformed navigation correction.

5. The navigation correction system of one of claims 1 to 4, wherein

(1) the navigation correction system is a regional navigation correction system, (2) the navigation corrections are regional navigation corrections, (3) the different navigation correction system is a global navigation correction system, and (4) the independently generated reference corrections are global navigation corrections, or
(1) the navigation correction system is a first regional navigation correction, (2) the navigation corrections are first regional navigation corrections, (3) the different navigation correction system is a second regional navigation correction system, and (4) the independently generated reference corrections are second regional navigation corrections, or
(1) the navigation correction system is a first sub-network of an overall navigation correction system, and (2) the different navigation correction system is a second sub-network of the overall navigation correction system.

6. The navigation correction system of one of claims 1 to 3, wherein the corresponding selected estimated delta value is an estimated delta integer ambiguity value, and the correction transformation module is further configured to: subtract the estimated delta integer ambiguity value from a generated integer ambiguity correction to generate a transformed integer ambiguity correction that is the transformed navigation correction.

7. A method for generating transformed navigation corrections, the method comprising:

generating, by a navigation correction system, navigation corrections by executing a first correction algorithm that sets one or more first parameters to arbitrary values;
receiving, by the navigation correction system and from a different navigation correction system, independently generated reference corrections that are generated by the different navigation correction system that executes a second correction algorithm that sets one or more second parameters to arbitrary values, wherein the navigation corrections are incompatible with the independently generated reference corrections;
solving, using the generated navigation corrections with the independently generated reference corrections, a system of one or more equations for observations, wherein the solving calculates one or more estimated delta values; and
transforming, by the navigation correction system, a selected generated navigation correction by adjusting the selected generated navigation correction by a corresponding selected estimated delta value, wherein the transforming generates a transformed navigation correction, and
wherein the transformed navigation correction is compatible with the independently generated reference corrections.

8. The method of claim 7,

wherein the method further comprises broadcasting, by the navigation correction system over one or more communication networks, the transformed navigation correction to one or more navigation receivers; and/or

wherein the transformed correction is used with the independently generated reference corrections when implementing a precise point positioning with ambiguity resolution algorithm.

9. The method of claim 7 or 8, wherein the transformed correction is a transformed ionospheric correction, in particular wherein the corresponding selected estimated delta value is an estimated delta ionospheric value and the method further comprising subtracting the estimated delta ionospheric value from a generated ionospheric correction to generate a transformed ionospheric correction that is the transformed navigation correction.

10. The method of one of claims 7 to 9, wherein

(1) the navigation correction system is a regional navigation correction system, (2) the navigation corrections are regional navigation corrections, (3) the different navigation correction system is a global navigation correction system, and (4) the independently generated reference corrections are global navigation corrections, or (1) the navigation correction system is a first regional navigation correction, (2) the navigation corrections are first regional navigation corrections, (3) the different navigation correction system is a second regional navigation correction system, and (4) the independently generated reference corrections are second regional navigation corrections, or (1) the navigation correction system is a first sub-network of an overall navigation correction system, and (2) the different navigation correction system is a second sub-network of the overall navigation correction system.

11. The method of claim 7 or 8, wherein the corresponding selected estimated delta value is an estimated delta integer ambiguity value, the method further comprising:
subtracting the estimated delta integer ambiguity value from a generated integer ambiguity correction to generate a transformed integer ambiguity correction that is the transformed navigation correction.

12. A non-transitory computer readable medium having software encoded thereon, the software when executed by one or more computing devices operable to:

generate navigation corrections by executing a first correction algorithm that sets one or more first parameters to arbitrary values;
receive, from a different navigation correction system, independently generated reference corrections that are generated by the different navigation correction system that executes a second correction algorithm that sets one or more second parameters to arbitrary values, wherein the navigation corrections are incompatible with the independently generated reference corrections;
calculate, using the generated navigation corrections with the independently generated reference corrections, an estimated delta values from a system of one or more equations; and
transform a selected generated navigation correction by adjusting the selected generated navigation correction by a corresponding selected estimated delta value, wherein the transforming generates a transformed navigation correction, and
wherein the transformed navigation correction is compatible with the independently generated reference corrections.

13. The non-transitory computer readable medium of claim 12,

wherein the transformed correction is used with the independently generated reference corrections when implementing a precise point positioning with ambiguity resolution algorithm;
and/or
wherein the software when executed by the one or more computing devices is further operable to broadcast, over one or more communication networks, the transformed navigation correction to one or more navigation receivers.

14. The non-transitory computer readable medium of claim 12 or 13, wherein the transformed correction is a transformed ionospheric correction;
in particular wherein the corresponding selected estimated delta value is an estimated delta ionospheric value, the software when executed by the one or more computing devices further operable to subtract the estimated delta ionospheric value from a generated ionospheric correction to generate a transformed ionospheric correction that is the transformed navigation correction.

15. The non-transitory computer readable medium of one of claims 12 to 14, wherein

(1) the navigation correction system is a regional navigation correction system, (2) the navigation corrections are regional navigation corrections, (3) the different navigation correction system is a global navigation correction system, and (4) the independently generated reference corrections are global navigation corrections, or
(1) the navigation correction system is a first regional navigation correction, (2) the navigation corrections are first regional navigation corrections, (3) the different navigation correction system is a second regional navigation correction system, and (4) the independently generated reference corrections are second regional navigation corrections, or
(1) the navigation correction system is a first sub-network of an overall navigation correction system, and (2) the different navigation correction system is a second sub-network of the overall navigation correction system.

FIG. 1

FIG. 2

PROCESSING CENTER
202

CORRECTION
INFORMATION
MODULE
116

TRANSMITTER
108

ONE OR MORE
NETWORKS
203

201

200

EP 4 553 541 A2

START  ~305

~300

GENERATE, BY CORRECTION SYSTEM, ONE OR MORE NAVIGATION CORRECTIONS  ~310

RECEIVE, BY THE CORRECTION SYSTEM, REFERENCE CORRECTIONS FROM A DIFFERENT CORRECTION SYSTEM  ~315

USE RECEIVED CORRECTIONS AND GENERATED CORRECTIONS TO CALCULATE ESTIMATED DELTA VALUES FROM A SINGLE DIFFERENCE (BETWEEN SATELLITES) SYSTEM OF ONE OR MORE EQUATIONS  ~320

TRANSFORM AT LEAST ONE GENERATED CORRECTION WITH A CORRESPONDING DELTA VALUE TO GENERATE AT LEAST ONE TRANSFORMED CORRECTION  ~325

TRANSMIT THE AT LEAST ONE TRANSFORMED CORRECTION TO RECEIVER  ~330

RECEIVER OPTIONALLY USES THE AT LEAST ONE TRANSFORMED CORRECTION WITH OTHER RECEIVED CORRECTION, WHICH ARE INDEPENDENTLY GENERATED BY A DIFFERENT CORRECTION SYSTEM, TO IMPLEMENT A POSITIONING TECHNIQUE  ~335

END  ~340

FIG. 3

FIG. 4A

EP 4 553 541 A2

FIG. 4B

EP 4 553 541 A2

200A

401

200B

400C

402

200C

102

104

409

FIG. 4C